Europäisches Patentamt

European Patent Office

Office européen des brevets

(19)

(11) **EP 1 349 109 A1**

(12) # EUROPEAN PATENT APPLICATION

(43) Date of publication:
**01.10.2003 Bulletin 2003/40**

(51) Int Cl.7: **G06K 19/077, H01Q 9/04**

(21) Application number: **02028362.8**

(22) Date of filing: **17.12.2002**

| | |
|---|---|
| (84) Designated Contracting States:<br>**AT BE BG CH CY CZ DE DK EE ES FI FR GB GR IE IT LI LU MC NL PT SE SI SK TR**<br>Designated Extension States:<br>**AL LT LV MK RO** | (71) Applicant: **Kabushiki Kaisha Toshiba**<br>**Tokyo (JP)** |
| (30) Priority: **28.03.2002 JP 2002092776** | (72) Inventor: **Miyasaka, Toshiki**<br>**1-chome, Minato-ku, Tokyo 105-8001 (JP)** |
| | (74) Representative: **Henkel, Feiler, Hänzel**<br>**Möhlstrasse 37**<br>**81675 München (DE)** |

(54) **Card device for radio communication with antenna module**

(57)     A radio communication card performs a radio communication function. The card (1) has a board (10) on which a circuit component (11 - 14) performing the radio communication function and an antenna are mounted. The antenna (20) includes an antenna element (21) connected to the board (10) provided on a side face portion of a card body (1), and a feed terminal (22) and a ground terminal (23) disposed on a planar portion of the card body (1). The feed terminal (22) is connected to an RF chip mounted on the board (10). A sealing cover member (102) covers the card body (1), the circuit component (11 - 14), and the antenna (20).

FIG. 1

EP 1 349 109 A1

**Description**

The present invention relates generally to a radio communication card including a circuit board that performs a radio communication function, and more particularly, to an antenna structure mounted on the card.

In recent years, mobile information apparatuses such as a notebook personal computer (notebook PC) and a personal digital assistant (PDA), which are provided with radio communication functions, have been developed. Such information apparatuses with radio communication functions generally fall into two types: one wherein a radio communication module and an antenna are accommodated in the apparatus body; and the other where a radio communication card is used.

In the latter type, a radio communication card is inserted in a card slot provided in the information apparatus body, thereby realizing a radio data communication function. A memory card, as well as the radio communication card, are usable in the card slot. Thus, the latter type is more useful than the former because the radio communication card, memory card, or the like, can be selectively used, as desired.

As a prior-art radio data communication card, there is known a PC card designed according to, e.g. PCMCIA standards (see Japanese Patent Application KOKAI Publication No. 10-283449, for instance). In this prior-art PC card, a radio circuit is mounted on an insertion portion that is to be inserted in the slot of the PC, and an antenna is mounted on a projecting portion that extrudes outside the PC. By virtue of this structure, wherein the antenna is mounted on the projecting portion, a stable radio communication performance can be achieved.

For example, using the radio communication card formed by using the PC card, a radio data communication function can be added to the information apparatus, such as a notebook PC or a PDA. When the radio communication card formed by using the PC card, for example, has been inserted in the card slot of the information apparatus body, that part of the radio communication card, on which the antenna and some components of the radio circuit are mounted, projects from the apparatus body as a projecting portion. This projecting portion is provided with a board (printed circuit board) on which circuit components and the antenna are mounted.

In the case of the radio communication card with this structure, if the number of circuit components mounted on the board of the projecting portion increases, the area of the projecting portion also increases accordingly. In addition, if a ceramic antenna, which is a relatively thick component among components on the board, is used as the antenna, the thickness of the projecting portion becomes greater than that of the insertion portion of the card.

With regards to the structure of this card, if the area of the projecting portion increases, the projecting portion of the card may easily come in contact with an external object, for example, when the information apparatus body is moved or carried. In worst cases, part of the card may be damaged, or the antenna or circuit component on the board may possibly be destroyed. Furthermore, it is difficult for the user to handle the structure when the projecting portion of the card is relatively thick.

The object of the present invention is to reduce the area and thickness of a part of a radio communication card, on which an antenna is mounted, the card realizing a radio communication function for an information apparatus such as a notebook PC or a PDA.

This summary of the invention does not necessarily describe all necessary features so that the invention may also be a sub-combination of these described features.

The invention can be more fully understood from the following detailed description when taken in conjunction with the accompanying drawings, in which:

> FIG. 1 shows an internal structure of a radio communication card according to an embodiment of the present invention;
> FIG. 2A is a side view illustrating the structure of an antenna according to an embodiment of the present invention;
> FIG. 2B is a plan view illustrating the structure of this antenna;
> FIG. 3 shows a positional relationship between circuit components and the antenna on the board according to an embodiment of the present invention;
> FIG. 4 illustrates a method of using the radio communication card according to an embodiment of the present invention; and
> FIG. 5 shows an example in which the radio communication card according to an embodiment of the present invention is used for a notebook PC.

An embodiment of the present invention will now be described with reference to the accompanying drawings.

(Structure of Radio Communication Card)

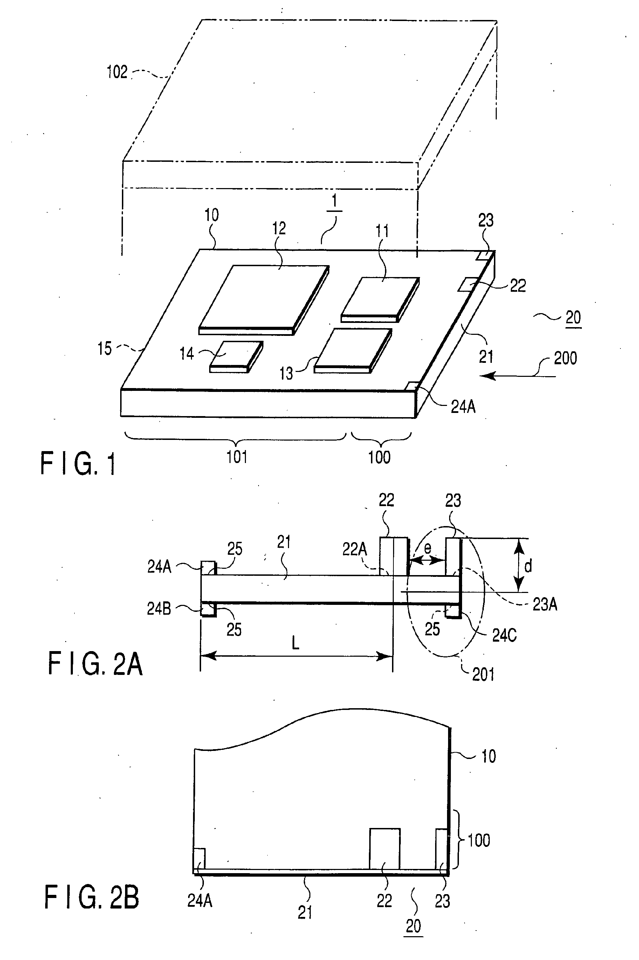

FIG. 1 shows a board 10 that constitutes a part of a card body 1 of a radio communication card according to an embodiment of the present invention. Specifically, FIG. 1 shows an internal structure of the card body, from which a casing (a sealing cover member) 102 for resin-sealing the board 10 has been removed.

Circuit components for realizing a radio communication function, as well as an antenna, are mounted on the board 10. Main circuit components include a radio communication integrated circuit (RF chip) 11, a baseband integrated circuit (baseband IC) 12, a flash ROM 13 storing firmware for the baseband IC, and a crystal oscillator 14.

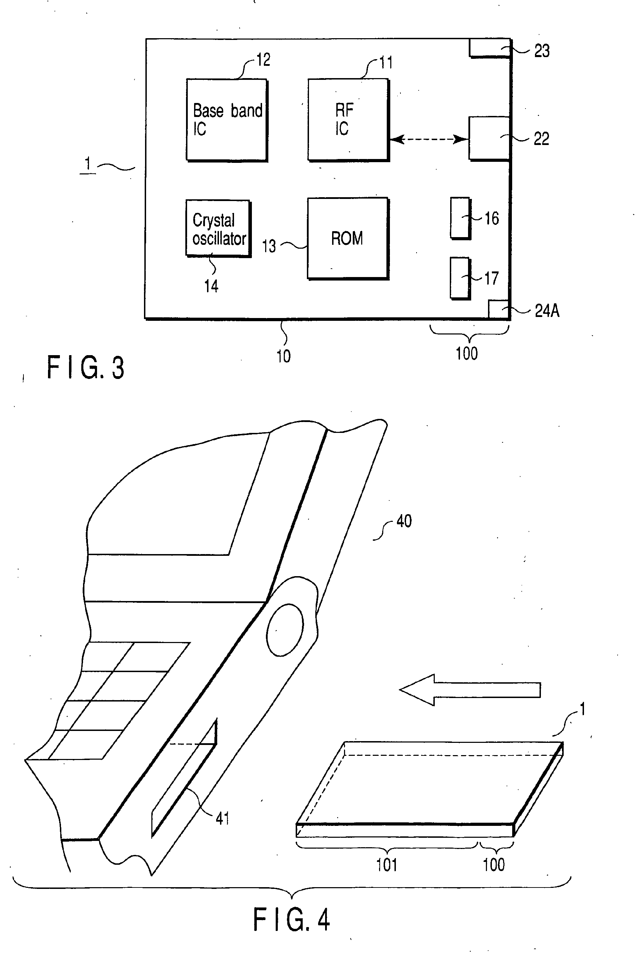

A projecting portion 100 at one side of the board 10 is provided with an antenna 20. The entire area of the board 10 is generally divided into the projecting portion 100 and an insertion portion 101. The insertion portion 101 is a portion to be inserted in a card slot 41 of a notebook PC 40, when a card body 1 is inserted in the card slot 41, as shown in FIG. 4. On the other hand, the projecting portion 100 is a portion that projects from the notebook, PC 40 when the card body 1 is attached to the card slot 41.

As is shown in FIG. 1, the insertion portion 101 is the portion on which the main circuit components are mounted, as shown in FIG. 1, and on which an interface connector (i.e., a side portion denoted by numeral 15) for connection to the card slot is provided. As is shown in FIG. 3, a chip capacitor 16 and a chip inductor 17, other than the main circuit components, are provided on the projecting portion 100 of board 10.

(Structure of Antenna 20)

Referring to FIGS. 2A and 2B, as well as FIG. 1, the structure of the antenna 20 according to an embodiment of the present invention will now be described. FIG. 2A is a side view, as viewed in the direction of arrow 200 in FIG. 1. FIG. 2B is a plan view, as viewed from above, of the projecting portion 100 of board 10 shown in FIG. 1.

As is shown in FIG. 1, an antenna element 21, which is a main part of the antenna 20, is provided on a side face of the projecting portion 100 of the board 10. This side face of the projecting portion 100 is opposed to the side face of the insertion portion 101 where the interface connector is provided. The antenna element 21 is a metallic thin-plate member of, e.g., an aluminum alloy (with a thickness of about 0.1 to 0.2 mm). The antenna element 21 is fixed to the side face of the projecting portion 100 by, e.g., an adhesive.

The antenna 20 has a feed terminal 22 and a ground terminal 23 coupled to the antenna element 21. As is shown in FIG. 2B, the feed terminal 22 is provided on a planar part of the board 10. The feed terminal 22 is connected to the RF chip 11 via a wiring pattern formed on the board 10 and is supplied with power necessary for the antenna function (see FIG. 3). The ground terminal 23 is also provided on the planar part of the board 10 and grounded via a wiring pattern formed on the board 10.

The feed terminal 22 is formed of the same material as the antenna element 21 and is bent substantially at right angles at a boundary indicated by a broken line 22A, as shown in FIG. 2A. Similarly, the ground terminal 23 is formed of the same material as the antenna element 21 and is bent substantially at right angles at a boundary indicated by a broken line 23A.

Claw portions 24A to 24C for holding the antenna element 21 to the side face of projecting portion 100 are coupled to the antenna element 21. These claw portions 24A to 24C are also formed of the same material as the antenna element 21. The claw portions 24A to 24C are bent substantially at right angles at boundaries indicated by broken lines 25 so as to clamp the projecting portion 100 of substrate 10. Thus, the claw portions 24A to 24C hold the antenna element 21 on the side face of projecting portion 100.

As is shown in FIG. 2A, the antenna 20 according to an embodiment of the present invention has a so-called "inverted-F" antenna structure. The antenna element 21 is an element for radiating radio waves. The dimensions L and d in FIG. 2A may satisfy the following equation:

$$L + d = \lambda/4 \qquad (1)$$

Where $\lambda$ is a wavelength of a radio wave to be emitted, and it is about 12.24 cm when frequency characteristics are, e.g., 2.45 GHz.

A region 201 in FIG. 2A corresponds to an impedance correction circuit. The characteristic impedance of "L + d" in equation (1) is normally 2 to 3Ω and is low. The impedance correction circuit adjusts the characteristic impedance at about 50Ω. A dimension $\underline{e}$ in the impedance correction circuit varies depending on the dielectric constant of board 10 and the input impedance of RF chip 11. Hence, it is necessary to adjust this dimension at the design stage.

The antenna 20 according to this embodiment has the inverted-F antenna structure, and thus the frequency band is limited to a certain range. In other words, the antenna element 21 itself includes characteristics of a band-pass filter (BPF). Accordingly, if the dimension $\underline{e}$, for instance, of the impedance correction circuit is adjusted, there is no need to provide circuit components of the BPF to be disposed on the projecting portion 100 of the card body.

As has been described above, the antenna 20 according to the embodiment has the inverted-F antenna structure wherein the antenna element 21 that is the main component of the antenna 20 is disposed on the side face of the projecting portion 100 of the board 10 included in the card body. Compared to an antenna structure wherein an antenna element 21 is arranged on a planar part of the board 10, the antenna element 21 of this embodiment is disposed not on the planar part of board 10 (where circuit components are provided) but on the vertical face extending in the. thickness direction of board 10, as shown in FIGS. 1, 2A, and 2B. Accordingly, the area of the planar part of board 10 may greatly be reduced. In addition, by virtue of the inverted-F antenna structure, the circuit elements of the BPF may be made needless, as mentioned above, and the area occupied by such circuit elements may be reduced.

Compared to the conventional structure where a relatively thick ceramic antenna is mounted on the board, the height of the projecting portion 100 of antenna 20 of this embodiment is made less than the height of the circuit components on the insertion portion 101. Therefore, the thickness of the projecting portion 100 of board 10 is not greater than that of the insertion portion 101, and the card of this embodiment has a relatively flat shape.

In short, according to the radio communication card of this embodiment, as shown in FIG. 4, the area and thickness of the projecting portion 100 on which the antenna of the card body 1 is mounted may be relatively reduced. Therefore, with regards to the entirety of the card body 1, the projecting portion 100 may be formed to have a flat shape in accordance with the thickness of the insertion portion 101.

The card body 1 of this embodiment may be inserted in the card slot 41 of the notebook PC 40, as shown in FIG. 4.

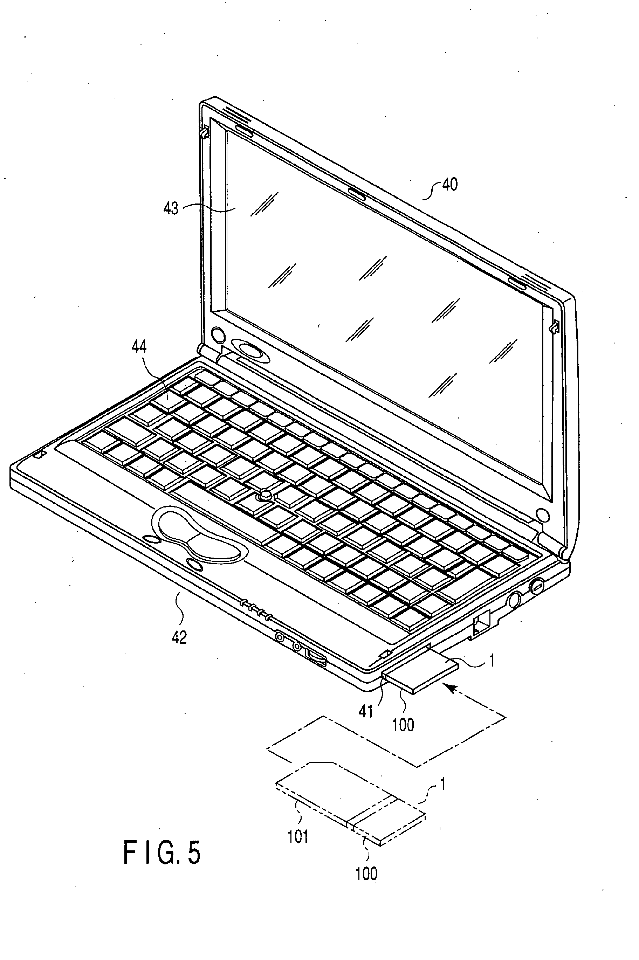

As shown in FIG. 5, for example, the notebook PC 40 is a portable computer corresponding to a portable information apparatus. In general terms, the PC 40 includes a computer body 42, a display unit 43 and a keyboard 44. The card slot 41 is provided at the side face of the computer body 42. In addition to the radio data communication card 1 of this embodiment, some other IC card, such as a memory card according to predetermined standards, may be removably be attached to the card slot 41.

When the radio data communication card 1 of this 'embodiment has been inserted in the card slot 41, as shown in FIG. 5, the insertion portion 101 is received inside the card slot 41, and normally the interface connector provided on the card 1 is connected to the connector in the card slot 41. The projecting portion 100 of card 1 protrudes from the card slot 41. The projecting portion 100 is equipped with the antenna 20, and a sufficient radio communication performance may be ensured.

On the other hand, the projecting portion 100 of the card 1 according to this embodiment has a relatively small area and is thin. Thus, even if the notebook PC 40 is moved with the card 1 being attached, the projecting portion 100 may avoid being in contact with an external object. Therefore, such a situation may effectively be avoided, in that a part of the card would be damaged or the antenna or circuit components on the board would be destroyed. Furthermore, because the entire card has a thin, flat shape, the user can easily handle it.

In the present embodiment, it is assumed that the inverted-F antenna structure is adopted. However, a structure other than the inverted-F antenna structure may be adopted if the antenna element 21 is disposed on the side face of board 10.

In this embodiment, the claw portions 24A to 24C are provided in order to hold the antenna element 21. Alternatively, other structures for holding the antenna element 21 may be adopted.

The antenna element 21 and the input/output terminals of the RF chip 11 may be coupled by soldering.

In short, in the present embodiment, the radio communication card for achieving the radio communication function employs an antenna having the antenna element disposed on the side face of the card body (and more specifically, onto the board). With this structure, when the card body is attached to the card slot of the information apparatus, the area of the projecting portion of the card is reduced because the antenna element, which is the main part of the antenna, is vertically disposed on the outwardly projecting portion of the card. Moreover, because the planar part of the projecting portion does not have a portion corresponding to the thickness of the antenna element, the card is reduced in thickness. In other words, the entire card has a flat shape.

Therefore, the present invention provides a radio communication card, which is usable in an information apparatus, such as a notebook PC or a PDA and has an antenna mounting portion with a smaller area and less thickness.

**Claims**

1. A card device for radio communication, comprising:

   a card body (1) having a printed circuit board;
   a circuit component (11 -14) mounted on the printed circuit board (10) of the card body (1) and performing a radio communication function; and
   an antenna (20), connected to the printed circuit board (10), having an antenna element (21) provided on a side face portion of the card body (1).

2. A card device according to claim 1, wherein the antenna (20) having the antenna element (21) is disposed on a side face portion of the printed circuit board (10), and a feed terminal (22) is disposed on a planar portion of the printed circuit board (10).

3. A card device according to claim 1, wherein the antenna (20) having the antenna element (21) is disposed on a side face portion of the printed circuit board (10), and has an inverted-F antenna structure including a feed terminal (22) and a ground terminal disposed on a planar portion of the printed circuit board (10).

4. A card device for radio communication, comprising:

   a card body (1) having a printed circuit board (10);
   a circuit component (11 -14) mounted on the printed circuit board (10) of the card body (1) and performing a radio communication function;
an antenna (20), connected to the printed circuit board (10), having an inverted-F antenna structure and an antenna element (21) provided on a side face portion of the card body (1); and
a casing (102) enclosing the card body (1), the circuit component (11 -14), and the antenna (20).

5. A card device according to claim 4, wherein the antenna (20) having the antenna element (21) is disposed on a side face portion of the printed circuit board (10), and a feed terminal (22) is disposed on a planar portion of the printed circuit board (10).

6. A card device according to claim 1 or 4, wherein the circuit component (11 -14) includes a radio communication integrated circuit (IC), and the antenna (20) having the antenna element (21) is disposed on a side face portion of the printed circuit board (10), and a feed terminal (22) is coupled'to the antenna element (21), disposed on a planar portion of the printed circuit board (10) and electrically connected to the radio communication IC (11).

7. A card device according to claim 1 or 4, wherein the antenna (20) includes:

   the antenna element (21) disposed on a side face portion of the printed circuit board (10);
   a feed terminal (22) disposed on a planar portion of the printed circuit board (10);
   a ground terminal (23) disposed on the planar portion of the printed circuit board (10); and
   a holding member (24A -24C) that engages the planar portion of the printed circuit board (10) and holds the antenna element (21).

8. A card device according to claim 7, wherein the holding member (24A -24C) is formed from a portion of a metallic thin-plate member that constitutes the antenna element (21).

9. A card device according to claim 1 or 4, wherein the card body (1) further includes a connector (15) for electrical connection to a host apparatus (40) in a state in which the card body (1) is inserted in a card slot (41) provided in the host apparatus (40), and the antenna (20) is configured to be disposed on a projecting portion protruding from the card slot (41), the projecting portion being located on a side opposite to a side of the card body (1) on which the connector is provided.

10. A card device according to claim 1 or 4, wherein the antenna (20) having the antenna element (21) is provided on a side face portion of the printed circuit board (10).

11. A card device according to claim 10, wherein the antenna (20) includes a feed terminal (22) disposed on a planar portion of the printed circuit board (10).

12. An antenna module applicable to a radio communication card having a circuit component (11 -14) mounted on a board of a card body (1) to perform a radio communication function, and a casing enclosing the card body (1), the circuit component (11 -14), and the antenna module, the antenna module comprising: an antenna element (21) directly connected to the board (10) and disposed on a side face portion of the board (10).

13. An antenna module according to claim 12, wherein the antenna module has an inverted-F antenna structure including the antenna element (21) disposed on the side face portion of the board (10), and a feed terminal (22) and a ground terminal (23) disposed on a planar portion of the board (10).

14. An antenna module applicable to a radio communication card having a circuit component (11 -14) mounted on a board of a card body (1) to perform a radio communication function, and a casing (102) enclosing the card body (1), the circuit component (11 -14), and the antenna module, the antenna module comprising an antenna element (21) directly connected to the board (10) and provided on a side face portion of the board (10), wherein the antenna module has an inverted-F antenna structure.

15. An antenna module according to claim 12 or 14, wherein the antenna module has a feed terminal (22) disposed on a planar portion of the board (10) .

16. An antenna module according to claim 12 or 14, further including:

   a feed terminal (22) disposed on a planar portion of the board (10);
   a ground terminal disposed on the planar portion of the board (10); and
   a holding member (24A -24C) that engages the planar portion of the board (10) and holds the antenna element (21).

17. An antenna module according to claim 16, wherein the holding member (24A -24C) is formed from a portion of a metallic thin-plate member that constitutes the antenna element (21).

FIG.1

FIG.2A

FIG.2B

FIG. 3

FIG. 4

F I G. 5

**European Patent Office**

**EUROPEAN SEARCH REPORT**

Application Number

EP 02 02 8362

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 050 972 A (NOKIA MOBILE PHONES LTD) 8 November 2000 (2000-11-08) * the whole document * | 1-6,9-15 | G06K19/077 H01Q9/04 |
| A | EP 1 128 465 A (SONY CORP) 29 August 2001 (2001-08-29) * paragraphs [0025]-[0060] * | 1-17 | |
| A | US 2002/000938 A1 (HOASHI MASAKAZU ET AL) 3 January 2002 (2002-01-03) * paragraphs [0011]-[0025] * * paragraphs [0046]-[0051] * | 1-17 | |
| A | EP 0 604 338 A (FRANCE TELECOM) 29 June 1994 (1994-06-29) * column 1, line 1 - column 4, line 20 * * column 6, line 34 - column 8, line 31 * | 1-17 | |
| A | NG A K P ET AL: "2.4GHZ ISM BAND ANTENNA FOR PC CARDS" IEEE ANTENNAS AND PROPAGATION SOCIETY INTERNATIONAL SYMPOSIUM. 1999 DIGEST. APS. ORLANDO, FL, JULY 11 - 16, 1999, NEW YORK, NY: IEEE, US, vol. 3, 11 July 1999 (1999-07-11), pages 2066-2069, XP000927178 ISBN: 0-7803-5640-3 * the whole document * | 1-17 | TECHNICAL FIELDS SEARCHED (Int.Cl.7) G06K H01Q |

The present search report has been drawn up for all claims

| Place of search | Date of completion of the search | Examiner |
|---|---|---|
| MUNICH | 2 July 2003 | Geiger, J-W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 02 02 8362

This annex lists the patent family members relating to the patent documents cited in the above-mentioned European search report.
The members are as contained in the European Patent Office EDP file on
The European Patent Office is in no way liable for these particulars which are merely given for the purpose of information.

02-07-2003

| Patent document cited in search report | | Publication date | Patent family member(s) | | Publication date |
|---|---|---|---|---|---|
| EP 1050972 | A | 08-11-2000 | FI | 991055 A | 08-11-2000 |
| | | | EP | 1050972 A2 | 08-11-2000 |
| | | | US | 6348893 B1 | 19-02-2002 |
| EP 1128465 | A | 29-08-2001 | JP | 2001237625 A | 31-08-2001 |
| | | | CN | 1324125 A | 28-11-2001 |
| | | | EP | 1128465 A2 | 29-08-2001 |
| | | | US | 2002034966 A1 | 21-03-2002 |
| US 2002000938 | A1 | 03-01-2002 | JP | 2001345745 A | 14-12-2001 |
| | | | JP | 2002094324 A | 29-03-2002 |
| EP 0604338 | A | 29-06-1994 | FR | 2699740 A1 | 24-06-1994 |
| | | | DE | 69317235 D1 | 09-04-1998 |
| | | | DE | 69317235 T2 | 15-10-1998 |
| | | | EP | 0604338 A1 | 29-06-1994 |

EPO FORM P0459

For more details about this annex : see Official Journal of the European Patent Office, No. 12/82